(19) Europäisches Patentamt
European Patent Office
Office européen des brevets

(11) Veröffentlichungsnummer : **0 374 660 B1**

# (12) EUROPÄISCHE PATENTSCHRIFT

(45) Veröffentlichungstag der Patentschrift :
**07.10.92 Patentblatt 92/41**

(51) Int. Cl.$^5$ : **C08F 210/02, // (C08F210/02, 218:08)**

(21) Anmeldenummer : **89122780.3**

(22) Anmeldetag : **09.12.89**

(54) **Verfahren zur Herstellung von Ethylen/Vinylacetat-Copolymerisaten mit erhöhter Festigkeit, neue Ethylen/Vinylacetat-Copolymerisate und ihre Verwendung.**

(30) Priorität : **23.12.88 DE 3843563**

(43) Veröffentlichungstag der Anmeldung :
**27.06.90 Patentblatt 90/26**

(45) Bekanntmachung des Hinweises auf die
Patenterteilung :
**07.10.92 Patentblatt 92/41**

(84) Benannte Vertragsstaaten :
**BE DE FR GB IT**

(56) Entgegenhaltungen :
**EP-A- 0 157 928**
**EP-A- 0 187 250**
**EP-A- 0 264 508**
**EP-A- 0 272 022**
**DE-B- 1 126 613**

(73) Patentinhaber : **BAYER AG**
**W-5090 Leverkusen 1 Bayerwerk (DE)**

(72) Erfinder : **Baade, Wolfgang, Dr.**
**Kölner Strasse 122**
**W-4047 Dormagen 1 (DE)**
Erfinder : **Obrecht, Werner, Dr.**
**Holderbergerstrasse 108**
**W-4130 Moers 2 (DE)**
Erfinder : **Ohm, Christian, Dr.**
**Walter-Flex-Strasse 32**
**W-5090 Leverkusen 1 (DE)**

**Beschreibung**

Die Erfindung betrifft ein diskontinuierliches, vorzugsweise aber ein kontinuierliches Verfahren zur Herstellung von Ethylen/Vinylacetat-Copolymerisaten (EVA) mit erhöhter Festigkeit unter Verwendung bestimmter Comonomerer durch Lösungspolymerisation, neue Ethylen/Vinylacetat-Copolymerisate mit einem Gehalt copolymerisierter Einheiten dieser Comonomeren und die Verwendung dieser Copolymerisate als Fließverbesserer, als Klebstoffbindemittel, als Mischungskomponente für Thermoplaste und Duroplaste und zur Herstellung von Vulkanisaten.

Ethylen und Vinylacetat lassen sich bekanntlich in unterschiedlichem Mengenverhältnis bei statistischer Verteilung der Monomeren radikalisch copolymerisieren. Bei niedrigem Gehalt an copolymerisiertem Vinylacetat (nachfolgend "Vinylacetatgehalt" oder "VA-Gehalt" genannt) zeigen die Copolymerisate die für Polyethylen bei Raumtemperatur übliche Kristallinität und haben infolge längerer Ethylensequenzen thermoplastischen Charakter, [s. hierzu H. Bartl, J. Peter, "Über Ethylen/ Vinylacetat-Copolymerisate und ihre Vernetzung", Kautschuk und Gummi 14, WT 23 - WT 32 (1961); Winnacker-Küchler, Chem. Technologie, Bd. 6, 4. Auflage, Kap. 2.2.7 "Ethylen-Vinylacetat-Copolymere", Carl Hanser Verlag, München-Wien, 1982, S. 570-572; M. Arne, R.H. Schwaar, Report Nr. 155, Ethylene Copolymers, Process Economics Program, Menlo Park, California, S. 1-40 (1983)].

Die Copolymerisation kann grundsätzlich nach folgenden drei Verfahren durchgeführt werden:

1. Emulsionspolymerisation,
2. Lösungspolymerisation und
3. Hochdruckmassepolymerisation.

EVA mit niedrigem Vinylacetatgehalt kann durch Hochdruckmassepolymerisation wirtschaftlich hergestellt werden (H. Bucka, R. Nitzsche, H. Onderka, Plaste und Kautschuk 30, 6, S. 302-305 (1983)). Die Polymerisation erfolgt im allgemeinen bei Drucken von 1000 bis 3000 bar und bei Temperaturen von 150 bis 280°C. Nach diesem Verfahren hergestellte Produkte mit Vinylacetatgehalten bis 30 Gew.-% können als Schmelzklebstoffe und als Fließverbesserer für Rohöle und Mitteldestillate sowie für die Kabelummantelung verwendet werden.

Zur Herstellung von EVA-Copolymerisaten mit mittleren bis hohen VA-Gehalten eignet sich das Hochdruckverfahren nicht, da es schwierig ist, bei den dort notwendigen Polymerisationstemperaturen Copolymerisate mit hohem Molekulargewicht und hoher Mooney-Viskosität zu erhalten.

EVA-Copolymerisate mit VA-Gehalten über 70 Gew.-% werden überwiegend durch Emulsionspolymerisation hergestellt. Übliche Bedingungen sind Drucke von 30 bis 500 bar und Temperaturen von 20 bis 100°C. Aus den erhaltenen Dispersionen wird das Copolymerisat im allgemeinen nicht isoliert, sondern direkt in Form der wäßrigen Dispersion (Latex) weiterverarbeitet. Gerade bei diesem Verfahren werden aber Produkte mit sehr hohem Gelgehalt erhalten, die aufgrund schlechter Verarbeitbarkeit als elastomere Festkautschuke unbrauchbar sind. Zwar wird in der DE-OS 3 000 009 ein Verfahren zur Herstellung von elastomeren Ethylen/Vinylacetat-Copolymerisaten mit hoher Mooney-Viskosität und niedrigem Gelgehalt beschrieben. Es handelt sich um Emulsionscopolymerisate mit einem Gehalt an copolymerisiertem Vinylacetat von 40 bis 70 Gew-%, die aus wäßrigen Lösungen durch Koagulation eines Ethylen/Vinylacetat-Copolymerisat-Latex gewonnen werden. Die Eigenschaften dieser Ethylen/Vinylacetat-Copolymerisate werden durch nicht vollständig abtrennbare Emulgatorreste bestimmt und machen die Copolymerisate für eine Reihe von Anwendungen unbrauchbar.

EVA-Copolymerisate mit einem VA-Gehalt von mindestens 30 Gew.-% können auch nach einem Lösungspolymerisationsverfahren bei mittleren Drucken hergestellt werden. Als Lösungsmittel verwendet man beispielsweise tert.-Butanol oder Gemische aus tert-Butanol, Methanol und Kohlenwasserstoffen, in denen die Polymerisate auch während des Polymerisationsprozesses in Lösung bleiben (DE-AS 11 26 613, 11 26 614 und 14 95 767, DE-OS 33 23 531, GB-PS 807 112 und 843 974, FR-PS 1 189 387, 1 225 704 und 1 238 589, US-PS 2 396 785 und 2 947 735). Nach diesem Verfahren entstehen hochmolekulare, schwach verzweigte Copolymerisate.

Das Lösungspolymerisationsverfahren wird in der Regel in einer Kaskade von drei bis zehn Reaktoren in tert.-Butanol als Lösungsmittel bei Temperaturen von 50 bis 130°C und einem Druck von 50 bis 400 bar in Anwesenheit radikalbildender Substanzen, wie organischen Peroxiden oder Azoverbindungen, als Polymerisationsinitiatoren durchgeführt. Dabei entstehen hochmolekulare, gelarme, elastomere Copolymerisate mit VA-Gehalten von 30 bis 75 Gew.-%. Die Vulkanisate dieser Produkte weisen je nach VA-Gehalt (gemessen in Form der in den Beispielen offenbarten Prüfmischung) Zugfestigkeiten von 10 bis 13 MPa und Weiterreißfestigkeiten von 3,3 bis 5 N/mm auf. Mit diesen Werten schien eine natürliche Grenze erreicht zu sein, die durch chemische Modifizierung des EVA anscheinend nicht überschritten werden konnte.

Es war Aufgabe der Erfindung, EVA nach dem Lösungspolymerisationsverfahren herzustellen, das im wesentlichen frei von gelierten Anteilen und zu Vulkanisaten mit erhöhten Festigkeiten verarbeitbar sein sollte.

Überraschenderweise wurde gefunden, daß sich die erfindungsgemäße Aufgabe durch Copolymerisation geringer Mengen von Verbindungen mit mindestens zwei Acryloyl-bzw. Methacryloylgruppen pro Molekül wirksam lösen, läßt. Der kausale Zusammenhang zwischen erfindungsgemäßem Verfahren und erhöhter Festigkeit der resultierenden Vulkanisate unter völliger oder weitgehender Vermeidung von gelierten Polymeranteilen ist zwar gesichert, kann aber noch nicht erklärt werden; es ist jedoch sicher, daß die erhöhte Festigkeit nicht einfach auf eine Molekulargewichtserhöhung zurückgeht, weil die Copolymerisation von anderen mehrfunktionellen Comonomeren, die man im allgemeinen zur Vernetzung und damit zur Molekulargewichtserhöhung einsetzt (z.B. Divinylbenzol, Triallylcyanurat, Diallylphthalat, Triallylphosphat), keinen merklich positiven, oft sogar einen deutlich negativen Einfluß auf die Festigkeit der Vulkanisate hat.

Gegenstand der Erfindung ist also ein Verfahren zur Herstellung von Ethylen/Vinylacetat-Copolymerisaten mit Gehalten an einpolymerisiertem Vinylacetat von 30 bis 90, vorzugsweise 40 bis 70 Gew.-% durch Lösungspolymerisation der Monomeren bei Drucken von 200 bis 1000 bar und Temperaturen von 25 bis 100, vorzugsweise 30 bis 80°C, dadurch gekennzeichnet, daß man die Polymerisation in Gegenwart von 50 ppm bis 1 Gew.-%, vorzugsweise 200 ppm bis 1 Gew.-%, bezogen auf eingesetzte polymerisierbare Monomere, (Meth-)Acryloylverbindung mit mindestens 2 Acryloyl- oder Methacryloylgruppen pro Molekül durchführt, wobei das Polymer nur aus Ethylen-, Vinylacetat- und (Meth-)Acryloyl -einheiten besteht

Für das erfindungsgemäße Verfahren bevorzugte (Meth-) Acryloylverbindungen umfassen Verbindungen mit einem Molekulargewicht von 126 bis 1000, vorzugsweise von 126 bis 500, beispielsweise Acrylsäureanhydrid, Methacrylsäureanhydrid, die Acrylate und Methacrylate von mehrwertigen, insbesondere von 2- und 3-wertigen, aliphatischen, cycloaliphatischen, araliphatischen und aromatischen Alkoholen mit 2 bis 24 C-Atomen pro Molekül, also z.B. Acrylate und Methacrylate von Ethylenglykol, Propandiol-1.2 und -1.3, Butandiol-1.2, 1.3, -2.3 und -1.4, Neopentylglykol, Hexandiolen, insbesondere Hexandiol-1.6, Cyclohexandiol-1.4, 1.4-Bis(hydroxymethyl)cyclohexan, Hydrochinon, Resorcin, Bisphenol-A, oxethyliertem Bisphenol-A, Hydrochinon-di(ß-hydroxyethyl)ether; von Glycerin, Trimethylolethan und -propan, Phloroglucin.

Bevorzugte (Meth-)Acryloylverbindungen sind auch Acrylate und Methacrylate von Polyetherpolyolen, vorzugsweise von Polyethylen- und Polypropylenglykolen mit 1 bis 20, vorzugsweise 1 bis 12, Ether-Sauerstoffatomen pro Molekül; insbesondere von Di- und Triethylenglykol und von Di-und Tripropylenglykol.

Das erfindungsgemäße Verfahren wird durch radikalbildende Substanzen initiiert. Geeignete Polymerisationsinitiatoren sind Radikalbildner mit Zerfallshalbwertszeiten, gemessen im für das erfindungsgemäße Verfahren eingesetzten Lösungsmittel, von 2-70 Minuten bei 70°C, wie z.B. Peroxide, Percarbonate, Hydroperoxide, Perester und/oder vorzugsweise radikalbildende Azoverbindungen. Derartige Verbindungen umfassen z.B. tert.-Amylperneodecanoat, tert.- Butylpernoedecanoat, Dicyclohexylperoxydicarbonat, Diisopropylperoxydicarbonat, Acetylcyclohexansulfonylperoxid sowie vorzugsweise 2,2'-Azobis(2,4-dimethyl-valeronitril) und 2,2'-Azobis(4-methoxy-2.4-dimethyl-valeronitril). Die Polymerisationsinitiatoren werden in der Regel in Mengen von 0,01 bis 1,5 Gew.-%, vorzugsweise 0,1 bis 1 Gew.-%, bezogen auf eingesetzte Monomere, eingesetzt.

Wegen der regelnden Wirkung des Vinylacetates und der Übertragungsreaktion durch das Lösungsmittel werden im allgemeinen keine Regler eingesetzt. In Ausnahmefällen werden jedoch zur Erzielung niedrigerer Molekulargewichte Regler verwendet. Hierfür kommen Ketone wie Aceton, Diethylketon, Aldehyde wie z.B. Propionaldehyd, oder Kohlenwasserstoffe wie z.B. Propen oder Isooctan, in Mengen von 50 bis 2000 ppm, vorzugsweise 100 bis 1000 ppm in Frage.

Das erfindungsgemäße Verfahren kann z.B. in Hochdruckrührautoklaven durchgeführt werden. Bei dem bevorzugten kontinuierlichen Verfahren arbeitet man in der Regel mit mindestens 4 Reaktionsbehältern.

Die zu verwendende Menge Lösungsmittel (z.B. tert.-Butanol) beträgt 10 bis 300 Gew.-%, vorzugsweise 40 bis 200 Gew.-%, bezogen auf eingesetztes Vinylacetat.

Der Endumsatz beträgt üblicherweise 30 bis 90 %, vorzugsweise 35 bis 80 %, bezogen auf eingesetztes Vinylacetat.

Die Verweilzeit liegt üblicherweise zwischen 3 und 18 Stunden, wobei mit steigendem VA-Gehalt kürzere Verweilzeiten möglich sind. So beträgt die Verweilzeit für Typen mit hohem VA-Gehalt 3 bis 8, für Typen mit niedrigem VA-Gehalt 6 bis 18 Stunden.

Die erfindungsgemäß hergestellten Copolymerisate besitzen im allgemeinen Mooney-Viskositäten gemäß DIN 53 523 von 10 bis 40 ML (1 + 4) 100°C, als Gewichtsmittel bestimmte Molekulargewichte $\overline{M}_w$ von 150.000 bis 1.000.000, vorzugsweise von 200.000 bis 500.000 (bestimmt durch Lichtstreuung) und als Zahlenmittel bestimmte Molekulargewichte $\overline{M}_n$ von 15.000 bis 200.000, vorzugsweise von 22.000 bis 70.000 (membranosmometrisch bestimmt in Tetrahydrofuran). Der Dispersionsindex

$$\frac{\overline{M}_w}{\overline{M}_n}$$

3

liegt im allgemeinen bei 2 bis 15.

Den Gelgehalt der Produkte kann man durch 24-stündige Extraktion mit Dichlormethan im Soxhlet-Extraktor bestimmen, wobei ein "weitgehend gelfreies" Produkt im Sinne der Erfindung nicht mehr als 0,5, vorzugsweise nicht mehr als 0,2 Gew.-% unlöslichen Rückstand, bezogen auf das Copolymerisat, enthalten darf.

Die erfindungsgemäß hergestellten Copolymerisate können in nicht vulkanisiertem oder in vulkanisiertem Zustand verwendet werden. Bevorzugte Beispiele für die Verwendung in nicht vulkanisiertem Zustand sind die Verwendung als Fließverbesserer für Schmiermittel und Hydrauliköle (wie z.B. Mitteldestillate nach DIN 7728 T1), als Klebstoffbindemittel, insbesondere für Schmelzkleber, und als (weichmachende) Mischungskomponente für Thermoplaste, Duroplaste und Kautschuke.

Die verwendeten Mengen hängen vom Einsatzzweck ab. So können Fließverbesserer in Mengen ab 1 Gew.-% und Schmelzkleber bis zu 100 Gew.-% der erfindungsgemäß hergestellten Copolymerisate enthalten.

Geeignete Thermoplaste und Duroplaste umfassen z.B. PVC, Polymethylmethacrylat, Styrol- und Acrylnitrilcopolymerisate einschließlich ABS, Polyvinylidenchlorid, Polyester einschließlich Polycarbonate, Polyamide, Polyvinylacetate, Polyphenylensulfid, Polyethylen und thermoplastische Polyester wie Polyalkylenterephthalate; ungesättigte Polyesterharze, Phenol/Formaldehyd- und Amin/Formaldehyd-Kondensate.

Für die meisten Anwendungen setzt man die erfindungsgemäß hergestellten Copolymerisate in vulkanisierter Form ein. Die Vulkanisation kann - gegebenenfalls nach Zugabe von Füllstoffen, und/oder Stabilisatoren - durch Vernetzung mit Peroxiden oder mit mehrfunktionellen, vernetzend wirkenden Verbindungen wie z.B. Triallylcyanurat, Triallylisocyanurat, Bismaleinimiden oder Divinylbenzol, erfolgen.

Erfindungsgemäß hergestellte Copolymerisate, die neben Ethylen- und Vinylacetateinheiten copolymerisierte Reste der weiter oben beschriebenen Comonomeren mit reaktiven Gruppen enthalten, können mit anderen Vernetzungschemikalien vernetzt werden. Hierfür kommen in Frage: Salzvulkanisation mit Metalloxiden wie Zinkoxid, Magnesiumoxid, Calciumoxid bei carboxylgruppenhaltigen Polymerisaten, Vernetzung mit Diaminen bzw. Disulfiden bei epoxidgruppenhaltigen und anhydridgruppenhaltigen Polymerisaten; Vernetzung mit Diisocyanaten bei hydroxylgruppenhaltigen Polymerisaten; Vernetzung mit elementarem Schwefel oder Schwefelspendern bei doppelbindungshaltigen und chloratomhaltigen Polymerisaten oder Polymerisaten, die Kohlenmonoxid eingebaut enthalten. Neben den genannten Vernetzungsreaktionen sind auch Vulkanisationsreaktionen wie z.B. die Harzvulkanisation oder die Vernetzung mit Chinonen geeignet.

"Vulkanisiert" im Sinne der Erfindung bedeutet, daß bei 10-stündiger Extraktion im Soxhlet-Aufsatz mit Tetrahydrofuran als Extraktionsmittel weniger als 3, vorzugsweise weniger als 1 Gew.-%, bezogen auf Copolymerisat, extrahierbar ist.

Eine wichtige Verwendung von Vulkanisaten erfindungsgemäß hergestellter Copolymerisate ist der Einsatz als Mischungskomponente für andere Kautschuke, wie z.B. kautschukartige Homo- und Copolymerisate von Butadien, Isopren, Chloropren, Acrylnitril, Vinylacetat, Estern von Acryl- bzw. Methacrylsäure und $C_1$-$C_8$-Mono- bzw. Dialkoholen; Vinylchlorid, Ethylen. Für diese Zwecke können die erfindungsgemäß hergestellten Copolymerisate in Mengen innerhalb weiter Grenzen, z.B. von 1 bis 99, vorzugsweise von 10 bis 90, insbesondere von 10 bis 40 und 60 bis 90 Gew.-%, bezogen auf Mischung, verwendet werden.

Man kann die bereits vulkanisierten Copolymerisate zusetzen, wird aber meist die Copolymerisate in nichtvulkanisierter Form den nicht-vulkanisierten Kautschuken zusetzen und dann beide gemeinsam vulkanisieren.

Die letzte Ausführungsform läßt sich auch auf die Mischung mit Thermoplasten, wie z.B. mit Ethylen/Vinylacetat-Copolymerisaten mit VA-Gehalten von 1 bis weniger als 30 Gew.-% anwenden.

Die erfindungsgemäß hergestellten Copolymerisate können als solche oder in Form der oben beschriebenen Mischungen zur Herstellung von vulkanisierten Formkörpern, Folien und Überzügen jeglicher Art verwendet werden, z.B. zur Herstellung von Kabelaußenmänteln, Kabelleitlagen, Isolierungen, Transportbändern, Kraftübertragungselementen und Schläuchen.

Die Prozentangaben der nachfolgenden Beispiele beziehen sich auf das Gewicht; Teile sind Gewichtsteile.

Beispiele

Die EVA-Copolymerisate wurden in Form der nachstehend beschriebenen Prüfmischung getestet:

```
100 Teile EVA-Copolymerisat,
  3 Teile Rhenogran P 50,
          (Gemisch aus 1 Teil Polycarbodiimid und 1 Teil
          EVA mit 45 % VA-Gehalt)
  3 Teile Rhenovin DDA-70,
          (Stabilisator, styrolisiertes Diphenylamin)
190 Teile Apyral 120,
          (Aluminiumoxid, mittl. Teilchengröße 1,5 µm)
  2 Teile Ucarsil RC 1 (Füllstoff; Silan),
 10 Teile Zinkborat,
  1 Teil  Zinkstearat,
  6 Teile Ingvorplast SRL,
          (paraffinischer Mineralölweichmacher)
0,7 Teile Rhenofit TAC/S (Triallylcaynurat) und
  6 Teile Perkadox 14/40
          (Bis-tert.-butyl-peroxo-diisopropylbenzol)
```

Aus der Prüfmischung wurden Platten gepreßt und bei 170°C unter einem Druck von 200 bar 20 Minuten vulkanisiert. Daraus wurden Prüfkörper ausgestanzt. Die Zugfestigkeit wurde an Normstäben S 2 nach DIN 53 504, die Weiterreißfestigkeit an einer Streifenprobe nach DIN 53 507 gemessen.

Beispiel 1

Eine Kaskade aus 5 in Reihe geschalteten Hochdruck-Rührautoklaven mit je 4 bis 6 m³ Inhalt wurde kontinuierlich mit

```
1450 kg/h Ethylen,
1930 kg/h Gemisch aus 36 Teilen VA und 64 Teilen
          tert.-Butanol,
 1,5 kg/h Methacrylsäureanhydrid,
 177 kg/h Gemisch aus 10,9 Teilen Azodimethylvalero-
          nitril, 641 Teilen tert.-Butanol und 361 Tei-
          len VA
```

gefüllt. Die Reaktion wurde bei einem Druck von 300 bar und bei Reaktionstemperaturen von 58, 60, 62, 64 und 68°C durchgeführt. Bei 72 % Umsatz erhielt man ein Copolymerisat mit
VA-Gehalt: 42 %,
26 ML (1 + 4) 100°C,
Zugfestigkeit (Prüfmischung): 16 MPa und
Weiterreißfestigkeit (Prüfmischung): 8 N/mm

Beispiel 2

Verfahren analog Beispiel 1 mit

```
 1140 kg/h Ethylen,
 1700 kg/h Gemisch aus 50 Teilen VA und 50 Teilen
             tert.-Butanol,
   1,8 kg/h Methacrylsäureanhydrid und
   122 kg/h Mischung aus 410 Teilen VA, 790 Teilen
             tert.-Butanol und 14,4 Teilen Azodimethyl-
             valeronitril.
```

Die Reaktorinnentemperaturen betrugen 62, 64, 64, 68 und 70°C. Bei 76 % Umsatz erhielt man ein Copolymerisat mit
VA-Gehalt: 50 %,
24 ML (1 + 4) 100°C,
Zugfestigkeit (Prüfmischung): 15,5 MPa und
Weiterreißfestigkeit (Prüfmischung): 5,5 N/mm.

Beispiel 3

Verfahren analog Beispiel 1 in 4 Reaktoren mit

```
  900   kg/h Ethylen,
 2160   kg/h Gemisch aus 50 Teilen VA und 50 Teilen
              tert.-Butanol,
   21   kg/h Methacrylsäureanhydrid und
 127,5 kg/h Gemisch aus 0,9 Teilen Azobismethoxydi-
              methylvaleronitril, 468 Teilen VA und 832
              Teilen tert.-Butanol.
```

Die Reaktorinnentemperaturen betrugen 62, 64, 66, und 70°C. Bei 68 % Umsatz erhielt man ein Copolymerisat mit
VA-Gehalt: 70,3 %,
16 ML (1 + 4) 100°C,
Zugfestigkeit (Prüfmischung): 13 MPa und
Weiterreißfestigkeit (Prüfmischung): 6 N/mm.

Beispiel 4

Verfahren analog Beispiel 2 mit den folgenden Reaktorinnentemperaturen 65, 70, 70, 75, 80°C, wobei die Initiatorlösung 16,8 kg tert.-Butylperpivalat enthält. Bei einem Umsatz von 74 % erhielt man ein Copolymerisat mit VA-Gehalt: 49,8 %,
23 ML (1 + 4) 100°C,
Zugfestigkeit (Prüfmischung); 13,0 MPa und Weiterreißfestigkeit (Prüfmischung): 4,0 N/mm.

Vergleich 1

Verfahren analog Beispiel 1 ohne Zusatz von Methacrylsäureanhydrid. Bei einem Umsatz von 71 % erhielt man ein Copolymerisat mit
VA-Gehalt: 50,5 %,
24 ML (1 + 4) 100°C,
Zugfestigkeit (Prüfmischung): 13,8 MPa und
Weiterreißfestigkeit (Prüfmischung): 6,1 N/mm.

Vergleich 2

Verfahren analog Beispiel 3 ohne Zusatz von Acrylsäureanhydrid. Bei einem Umsatz von 71 % erhielt man ein Copolymerisat mit

VA-Gehalt: 69,5 %,
17 ML (1 + 4) 100°C,
Zugfestigkeit (Prüfmischung): 10,7 MPa und
Weiterreißfestigkeit (Prüfmischung): 4,8 N/mm.

## Patentansprüche

1. Verfahren zur Herstellung von Ethylen/Vinylacetat-Copolymerisaten mit Gehalten an einpolymerisiertem Vinylacetat von 30 bis 90 Gew.-% durch Lösungspolymerisation der Monomeren bei Drucken von 200 bis 1000 bar und Temperaturen von 25 bis 100°C, dadurch gekennzeichnet, daß man die Polymerisation in Gegenwart von 50 ppm bis 1 Gew.-%, bezogen auf eingesetzte polymerisierbare Monomere, (Meth-)Acryloylverbindung mit mindestens 2 Acryloyl- oder Methacryloylgruppen pro Molekül durchführt, wobei das Polymer nur aus Ethylen-, Vinylacetat- und (Meth-)Acryloyl - Einheiten besteht

2. Verfahren nach Anspruch 1 bei Temperaturen von 30 bis 80°C.

3. Verfahren nach Ansprüchen 1 und 2 in Gegenwart von 200 ppm bis 1 Gew.% (Meth-)Acryloylverbindung mit mindestens 2 Acryloyl- oder Methacryloylgruppen pro Molekül.

4. Verfahren nach Ansprüchen 1 bis 3, wonach als (Meth-)Acryloylverbindung Acrylsäureanhydrid oder Methacrylsäureanhydrid ausgewählt wird.

5. Ethylen/Vinylacetat-Copolymerisate mit einem Gehalt an einpolymerisertem Vinylacetat von 30 bis 90 gew.-% erhähltlich nach dem Verfahren des Anspruchs 1.

6. Verwendung der Copolymerisate nach Anspruch 5 als Fließverbesserer, als Klebstoffbindemittel und als Mischungskomponente für Thermoplaste, Duroplaste und Kautschuke.

7. Verwendung der Copolymerisate nach Anspruch 5 zur Herstellung von Formkörpern.

8. Verwendung der Copolymerisate nach Anspruch 5 zur Herstellung von Vulkanisaten.

## Claims

1. A process for the production of ethylene/vinyl acetate copolymers containing 30 to 90% by weight copolymerized vinyl acetate by solution polymerization of the monomers under pressures of 200 to 1,000 mbar and at temperatures of 25 to 100°C, characterized in that the polymerization is carried out in the presence of 50 ppm to 1% by weight, based on the polymerizable monomers used, of a (meth)acryloyl compound containing at least 2 acryloyl or methacryloyl groups per molecule, the polymer consisting of ethylene, vinyl acetate and (meth)acryloyl units.

2. A process as claimed in claim 1 at temperatures of 30 to 80°C.

3. A process as claimed in claims 1 and 2 in the presence of 200 ppm to 1% by weight of a (meth)acryloyl compound containing at least 2 acryloyl or methacryloyl groups per molecule.

4. A process as claimed in claims 1 to 3, in which acrylic anhydride or methacrylic anhydride is used as the (meth)acrloyl compound.

5. Ethylene/vinyl acetate copolymers containing 30 to 90% by weight copolymerized acrylonitrile obtainable by the process claimed in claim 1.

6. The use of the copolymers claimed in claim 5 as flow promoters, as adhesive binders and as a mixture component for thermoplastics, thermosets and rubbers.

7. The use of the copolymers claimed in claim 5 for the production of mouldings.

8. The use of the copolymers claimed in claim 5 for the production of vulcanizates.

**Revendications**

1. Procédé de préparation de copolymères éthylène/acétate de vinyle à des teneurs en acétate de vinyle polymérisé de 30 à 90 % en poids par polymérisation en solution des monomères à des pressions de 200 à 1 000 bars et des températures de 25 à 100°C, caractérisé en ce que l'on procède à la polymérisation en présence de 50 ppm à 1 % en poids, par rapport aux monomères polymérisables mis en oeuvre, d'un dérivé (méth)acryloylique à au moins deux groupes acryloyle ou méthacryloyle par molécule, le polymère consistant uniquement en motifs éthylène, acétate de vinyle et (méth)acryloyle.

2. Procédé selon la revendication 1, dans lequel on opère à des températures de 30 à 80°C.

3. Procédé selon les revendications 1 et 2, dans lequel on opère en présence de 200 ppm à 1 % en poids de dérivé (méth)acryloylique à au moins deux groupes acryloyle ou méthacryloyle par molécule.

4. Procédé selon les revendications 1 à 3, dans lequel le dérivé (méth)acryloylique consiste en anhydride acrylique et/ou anhydride méthacrylique.

5. Copolymères éthylène/acétate de vinyle contenant de 30 à 90 % en poids d'acétate de vinyle polymérisé, obtenus par le procédé de la revendication1.

6. Utilisation des copolymères de la revendication 5 en tant qu'agents fluidifiants, liants pour adhésifs et composants de mélanges pour des thermoplastes, des duroplastes et des caoutchoucs.

7. Utilisation des copolymères de la revendication 5 pour la fabrication d'objets moulés.

8. Utilisation des copolymères selon la revendication 5 pour la fabrication de produits vulcanisés.